# EUROPEAN PATENT SPECIFICATION

(11) **EP 1 651 009 B1**
(45) Date of publication and mention of the grant of the patent: **10.12.2008**
(21) Application number: 05256522.3
(22) Date of filing: 21.10.2005
(51) Int. Cl.: H05B 3/26

(54) **Heaters for liquid heating vessels**
Heizer für Heizgefässe für Flüssigkeiten
Dispositifs chauffants destinés à des récipients chauffants des liquides

(30) Priority: 21.10.2004 GB 0423430; 14.01.2005 GB 0500759
(43) Date of publication of application: 26.04.2006
(73) Proprietor: STRIX LIMITED, Ronaldsway, Isle of Man IM9 2RG (GB)
(72) Inventor: Garvey, Vincent Joseph, Douglas Isle of Man IM1 1BD (GB)
(74) Representative: Samuels, Adrian James

(56) References cited:
- CA-A1- 1 202 659
- DE-A1- 10 131 995

## Description

The inventions disclosed herein relate to electrical heater assemblies of the type which are intended to close an opening in the base of the liquid chamber of a liquid heating vessel and which include a resistance heating element. They relate particularly, but not exclusively, to heaters for heating water - either to boiling or to a temperature below boiling.

Heaters which may be used to close an opening in the base of a liquid heating vessel (known in the art as "underfloor heaters") and which comprise a sheathed heating element on the underside are well known in the art. The relatively low cost of setting up and operating manufacturing facilities for such heaters has in recent years seen them come to predominate in most market sectors.

The conventional construction of an underfloor heater is to form a generally flat circular plate out of stainless steel typically between 0.4 mm and 0.8 mm thick. Suitable circumferential formations are provided at the edges of the plate to allow it to be sealingly retained in the vessel - such as a peripheral channel in accordance with the Applicant's Sure Seal system which is described in greater detail in WO 96/18331. However, the central, heated region is typically flat.

A circular aluminium plate known as a diffuser plate is then brazed onto the underside of the flat central region of the stainless steel plate. The diffuser plate is usually of the order of 1.5 to 3 mm thick. A sheathed heating element is then brazed onto the diffuser plate. The element consists of an elongate, arcuate aluminium tube which encapsulates a coiled resistance wire packed in magnesium oxide.

Threaded bosses are also staked onto or drawn from the diffuser plate and finally a control unit or discrete control components are attached to the diffuser plate, with the thermally responsive actuators thereof in intimate thermal contact with the diffuser plate.

The diffuser plate performs a number of functions. Firstly, it promotes lateral conduction of heat from the element which would otherwise be inhibited by the poor thermal conductivity of the stainless steel plate. This helps to enhance heat flow into the water to some degree during normal use but more significantly it allows heat to be conducted into the bimetals (or other thermal sensors of the control) rapidly if the vessel is switched on dry.

Secondly the diffuser plate serves to mount the control unit and element rigidly to the stainless steel plate.

Thirdly the presence of the diffuser plate prevents distortion in the base plate when the element is brazed on which might result from temperature variations across the base plate during cooling.

However, the Applicant has appreciated that the material cost of the stainless steel base plate and aluminium diffuser plate both represent significant proportions of the overall production cost of sheathed underfloor heaters and it is an overall object of this invention to reduce one or both of these costs.

DE 10131995 discloses a heater plate having a heating element tube bonded to its underside. This document discloses the features in the preamble to claim 1.

In accordance with the present invention there is provided a heater as defined in claim 1.

The heater plate has a thickness of less than or substantially equal to 0.3 mm. Preferably the heater plate has a thickness substantially equal to 0.2 mm.

Thus it will be seen by those skilled in the art that in accordance with the invention a thin stainless steel plate is provided as the substrate for the heater without a diffuser plate being provided. This significantly reduces the material cost since the thinner stainless steel is less expensive and the cost of the aluminium for the diffuser plate is avoided.

It was previously believed in the art that such a heater of a conventional size for kettles, beverage makers etc. could not be constructed to be sufficiently robust or with a visual appearance sufficiently acceptable by customers to make it commercially viable. In particular, one of the potential problems arising from omission of the aluminium diffuser plate is that during brazing of the element unsightly distortion of the heater plate tends to take place giving a very poor visual appearance that would not normally be expected to be acceptable to customers. The same unsightly distortion can occur in use, especially during dry switch on of the vessel. Without a diffuser plate, the region brazed to the element will heat very quickly but the rest of the plate will not heat due to the poor thermal conductivity of stainless steel.

It is an object of the invention to alleviate this problem and provide further benefits.

In accordance with a first set of preferred embodiments the heater plate comprises a feature inwardly of the element for absorbing distortion thereof during manufacture. The Applicant has appreciated that by providing a specific feature for absorbing distortion, the remainder of the heater plate will suffer a reduced amount of distortion.

The Applicant has realised that distortion of the heater plate may occur in various different ways. In particular, the distortion may result from expansion in a radial direction (mode I distortion) or from expansion in a circumferential direction (mode II distortion). Furthermore the Applicant has appreciated that different distortion absorption features may be advantageously employed to reduce the effects of the different modes of distortion.

In one example envisaged for tackling mode I distortion the distortion absorption feature comprises a groove and/or lip projecting from the general plane of the heater plate. Such a feature can simply act to absorb radial distortion by being compressed or stretched radially in the manner of a bellows without significantly affecting the overall appearance of the plate. Of course any combination of grooves and lips could be provided. As well as assisting in absorbing distortion, such a feature helps to stiffen the plate.

According to the present invention the plate comprises an annular channel radially inwardly of the element. A substantially vertical section of the plate extends from adjacent the element to said channel.

The Applicant has also discovered that rigidity of the plate can be enhanced and the visual impact of distortion reduced by forming the central region of the plate with a continuous curve that is substantially without a horizontal portion. This stems partly from a realisation that the effect of distortion is perceived most on flat surfaces and partly from the greater rigidity that curvature out of the plane of the element contacting portion of the plate provides. Thus it is a preferred feature of each of the foregoing aspects of the invention that the central region of the plate is substantially continuously curved.

Many different arrangements having this feature are envisaged. In a preferred set of embodiments the central region has an overall domed shape, preferably convex when viewed from the liquid-facing side. Preferably a channel is formed at the periphery of the domed portion by a step in the vertical profile.

In other possible embodiments the heater plate is formed so as to have the approximate shape of part of the surface of a torus - that is to say when viewed in cross-section the heater plate surface has a maximum or minimum displacement from the horizontal approximately mid-way along each radius.

The very centre of the heater will, as a consequence of the torus shape, be raised above or extended below at least the mid-way region of the plate. Preferably the centre is raised - i.e. the profile of the plate is that of the lower face of a torus. The centre could be substantially flat but preferably it is conical or domed. This has been found to enhance circulation of the liquid e.g. water in the vessel. More particularly the Applicant has appreciated that it is preferable to form the upper surface of the heater plate to conform generally to the natural convection flow pattern of the water during heating. When a conventional underfloor heating element is provided generally towards the periphery of a flat plate, water above it will be heated and rise in a column as a result of its lower density. This will draw water from both sides which meets above the element. The water will then rise to the top and sink again generally in the centre of the vessel until it hits the plate and is so diverted left or right. This pattern, especially the counter currents that blend into one another, will generally lead to a tendency for stagnation zones to be created immediately above the element and the centre of the plate where there is little movement of water. In the former case this is undesirable as it increases the tendency for localised nucleate boiling which generates noise. In the latter case it limits the accuracy with which the temperature of the water may be sensed by a thermal sensor in the central region of the plate.

The Applicant has appreciated however that the 'torus' shape referred to above and particularly the central cone or dome, enhances circulation by reducing the tendency for stagnation zones to form. Effectively the plate is preferably streamlined - i.e. conforms to the natural flow pattern of water over it.

Indeed a cone or dome at the centre is considered to be novel and inventive in its own right and thus when viewed from a yet further aspect the invention provides an electric heater for a liquid heating vessel comprising a heater plate for closing an opening in the base of the vessel and a heating element formed on or mounted to the underside of the heater plate, said heater plate comprising a discrete central region thereof formed into a cone or dome.

Where in accordance with the embodiments and aspect of the invention set out above the centre is raised, e.g. into a cone or dome, it is most convenient for this to be rotationally symmetric - i.e. circular in horizontal cross-section, although this is not essential. However, where it is the case; it is preferred that a thermally conductive member be attached, such as by brazing, to the underside of the plate by means of an annular contact zone. Such an arrangement is beneficial since it allows the water temperature to be communicated, by means of the thermally conductive member, to a thermal sensor such as a bimetal on a control unit. The annulus shape however minimises the visually perceptible effect of brazing on the thermally conductive member.

Even when the raised central region is rotationally symmetric, the rest of the heater plate may not be so.

Preferably the thermally conductive member specified above comprises mainly steel, preferably mild steel. One advantage the Applicant has appreciated that steel has over aluminium which conventionally forms the interface with the control unit is that steel has a greater resilience and thus lends itself to the formation of simple fixings for the control such as resilient tabs or clips.

The steel of the thermally conductive member could be exposed but preferably a coating such as zinc is applied. In preferred embodiments the member is made from commercially available Zintec (trade mark).

Preferably the member also serves or is able to serve to mount one or more control components such as a control unit. Preferably the thermally conductive member is also in good thermal contact with the heating element.

A single thermally conductive member could span the heater, at least substantially across a diameter thereof to the heating element e.g. to provide structural support to the heater. Preferably though the thermally conductive member comprises a heat bridge between the heating element and a thermal sensor such as a thermally sensitive actuator in good thermal contact with the heat bridge. Preferably two such heat bridges are provided. It or they may be brazed, clamped or otherwise mounted to the element. In preferred embodiments the or each heat bridge is mounted by securing a tab thereof between the element and the heater plate. This simplifies manufacture and ensures good thermal conductivity between the element and the heat bridge.

In other arrangements the rigidity of a thin heater plate; and the ability to disguise the visual effect of distortion caused during brazing where no aluminium diffuser plate is provided; may both be enhanced by forming the plate with a profile including a plurality of curvatures. Each curved portion and the transition(s) between them serve both to strengthen the plate and disguise distortion.

The profile could be continuously curved or may include one or more steps. Indeed, it has been found that a step may function in a similar way to one of the curved regions.

It will be appreciated that having a step and a curved portion or two curved portions of differing curvatures are preferred embodiments of the invention set out previously.

In order to reduce the effects of mode II distortion it is preferable to provide a distortion absorption feature comprising a portion of the heater plate which is locally raised or lowered in a circumferential direction. In other words, the circumferential profile of the heater plate comprises local hill or trough portions. The Applicant has appreciated that such a feature or features can act to absorb and disguise circumferential distortion by being compressed or stretched circumferentially thereby marginally enhancing and/or reducing the local raised/lowered portions without significantly affecting the overall appearance of the plate. Of course any combination of raised and/or lowered portions could be provided, circumferentially spaced on the surface of the heater plate.

As well as helping to absorb mode II distortion, such hill and/or trough features help to stiffen the plate.

The raised and/or lowered portions may be confined to a discrete radial band but preferably they have a tapering extent across the radius of the plate - e.g. like spokes.

Preferably the circumferential profile comprises at least one raised portion and at least one lowered portion.

The provision of raised or lowered portions is advantageous for the reasons set out above. However it is also advantageous for the element to be locally raised in the vicinity of a thermal sensor as this portion will be exposed first if the vessel should begin to boil dry. By exposing the portion in the vicinity of the sensor first, the resultant overheating of the element can be detected as rapidly as possible by the sensor and power to the heater interrupted or reduced. Similarly it is also advantageous for the element to be locally lowered in a region away from the thermal sensor to ensure that such a region is exposed last even if the vessel is operated at a slight angle such that the lowered portion is on the part of the plate tilted up.

Conveniently therefore in accordance with some preferred embodiments the raised/lowered portion is in the region of the heater plate over the element, the element being raised and/or lowered so as to conform to the plate. Preferably in such embodiments the heater plate comprises two locally raised portions in its circumferential profile. Preferably the two raised portions are diametrically opposed so that where the vessel is operated on a slight incline, one of the two raised portions will be exposed first if the vessel starts to boil dry. This ensures that the response to overheating when the heater is operated at an angle is no worse than if the plate were planar and for most tilt directions will be an improvement. Preferably in such embodiments the circumferential profile comprises two lowered portions, preferably diametrically opposed. This allows an improved performance where the vessel is operated at an angle since the lowered portions may be arranged away from thermal sensors and so prevent the lowered part of the element being exposed until such sensors have interrupted the power supply to prevent overheating. In particularly preferred embodiments the profile comprises two raised and two lowered portions, preferably alternating around the circumference. In one embodiment the lowered portions are approximately half way between two diametrically opposed raised portions. In other words, the lowered portions and the raised portions are alternately spaced at 90° around the plate. This provides optimum overheat protection backup in the worst case where the vessel is tilted on the axis joining the two raised portions.

However it is not essential for the raised or lowered portions to coincide with the element. For example they may be provided radially inwardly of the element. The element need not therefore be raised and or lowered. It could be substantially flat or just gently inclined towards the thermal sensor(s).

In accordance with the present invention where not already specified the following features are preferred individually and independently of one another in any combination: that the heater plate has a thickness of less than or substantially equal to 0.3 mm, more preferably substantially equal to 0.2 mm; that the heater plate is of stainless steel; that the heater is suitable for heating water to boiling; that the heater plate is circular or substantially so; that the power of the heating element is in the approximate range 900 W to 3000 W, preferably 2 to 3 kilowatts; and that a support bracket, preferably of steel, preferably zinc coated, extending across and attached to the heater plate is provided.

The diameter of the heater plate is preferably between 80 and 300 mm, more preferably between 100 and 250 mm, more preferably between 120 and 220 mm and most preferably between 170 and 210 mm. Looked at another way the thickness is preferably less than 0.5% of the diameter, more preferably less than 0.3%, most preferably less than 0.2%.

In accordance with the invention a heating element is formed on or mounted to the underside of the heater plate. In many circumstances a conventional sheathed element will be preferred. In some applications however the element could comprise a resistance wire embedded in an insulating material in an integral channel formed on the underside of the heater plate, a closure member being provided thereover. Such arrangements are described in greater detail in WO 00/13561.

Although only one heating element has been mentioned in respect of the embodiments described above, additional elements could also be provided - e.g. to provide a separate keep-warm element.

Although in at least some of its preferred embodiments the invention allows a heater without a diffuser plate to be successfully produced, the invention is not limited to heaters without a diffuser or similar component. For example a thinner or smaller diffuser or one made of a cheaper material could be used whilst still retaining some of the benefits of the invention. Indeed many aspects of the invention are beneficial in their own right even if a conventional diffuser plate were to be used. For example it is believed that a plate as thin as 0.2 or 0.3 mm has never successfully been used even with a diffuser plate.

Except where they are mutually exclusive from a technical point of view, all of the individual features set out hereinabove may be provided in any and all combinations within the scope of the invention.

Certain preferred embodiments of the invention will now be described, by way of example only, with reference to the accompanying drawings in which:
Fig. 1 is a schematic view of a sheathed heating element in accordance with a first embodiment of the invention;
Fig. 2 is a schematic view of a heater plate onto which the element of Fig. 1 may be fitted;
Fig. 3 is a schematic view of a support bracket for use with the heater of the first embodiment;
Fig. 4 is a sectioned perspective view through the heater plate and support bracket with the element omitted;
Fig. 5 is an underside elevation of the heater and support bracket of another embodiment;
Figs. 6a and 6b are respectively a sectional and rear elevational view of the heater assembly including control unit;
Figs. 7a and 7b are respectively a sectional and rear elevational view of a heater in accordance with a second embodiment of the invention;
Fig. 8 is a bottom elevational view of a heater plate in accordance with another embodiment;
Fig. 9 is a plan view of a heater plate in accordance with a further embodiment;
Fig. 10 is a perspective view of a heater plate in accordance with another embodiment of the invention; and
Fig. 11 is a sectioned perspective view through the heater plate of Fig. 10;
Fig. 12 is an underside perspective view of the heater plate of Fig. 10 with a sheathed heating element attached;
Fig. 13 is a perspective view of the heating element with the plate omitted;
Fig. 14 is a perspective view of another embodiment of the invention having separate heat bridges;
Fig. 15 is a section though the heater of Fig. 14; and
Fig. 16 is a section view similar to Fig. 15 with the heat bridges removed.

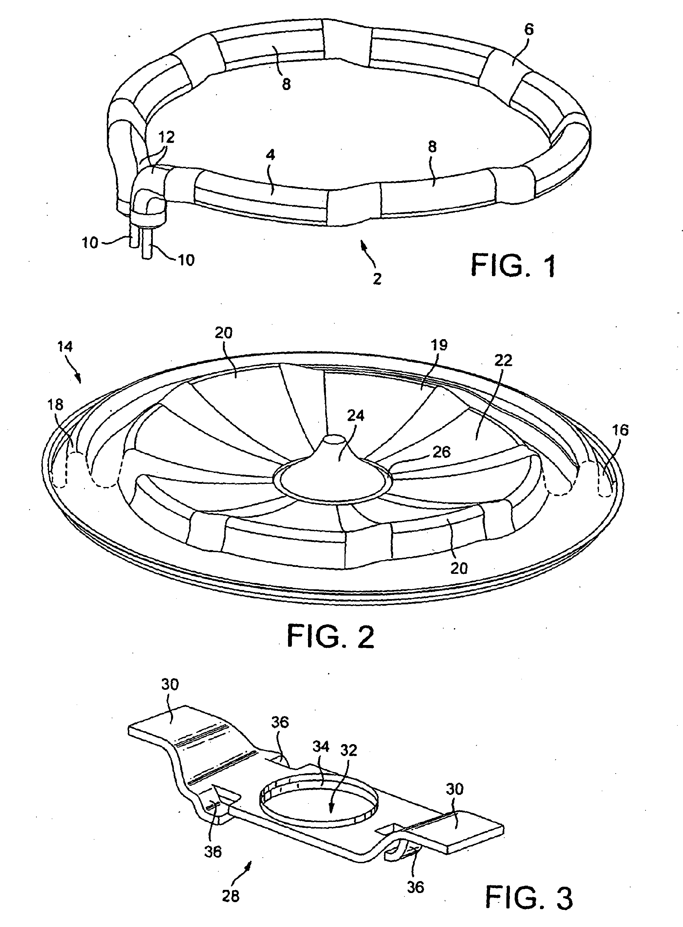

Fig. 1 shows the sheathed heating element 2 of a first embodiment before it is attached to the underside of the heater plate. The element is broadly manufactured in a standard way by placing a coil of nickel-chromium resistance wire into a tubular metal sleeve and filling the remainder of the tube with magnesium oxide for thermal conduction and electrical insulation. However, there are several features of the heating element shown in Fig. 1 that are new. Firstly, rather than the standard aluminium outer tube, in accordance with one aspect of the invention, the tubular outer sheath is made from steel using a suitable mild steel.

Secondly, the cross-sectional shape of the tubular sheath 4 is not circular throughout most of the length of the element 2 but rather is generally triangular with its apex on the upper side thereof i.e. that which is nearest the water. Thirdly, the heated part of the element 2 is not all in a single plane but rather comprises two upwardly kinked sections 8 diametrically opposite one another and each approximately 90° away from the cold tails 10.

Turning to the cold tails 10 it will be seen that in contrast to the usual horseshoe element shape, in this embodiment the heated part of the element 2 extends around substantially 360° with the two ends of the element 12 touching one another and bent at right angles to the general plane of the element so that the cold tails 10 which project therefrom bend downwardly.

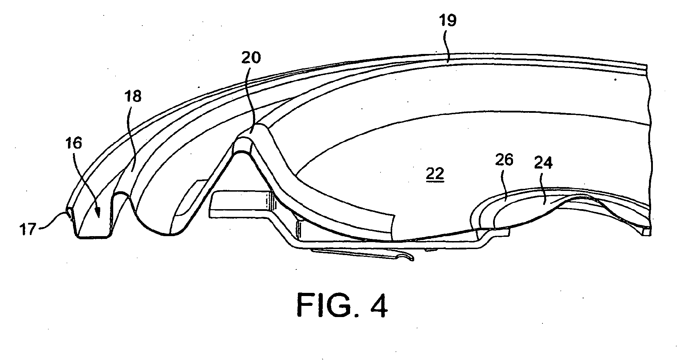

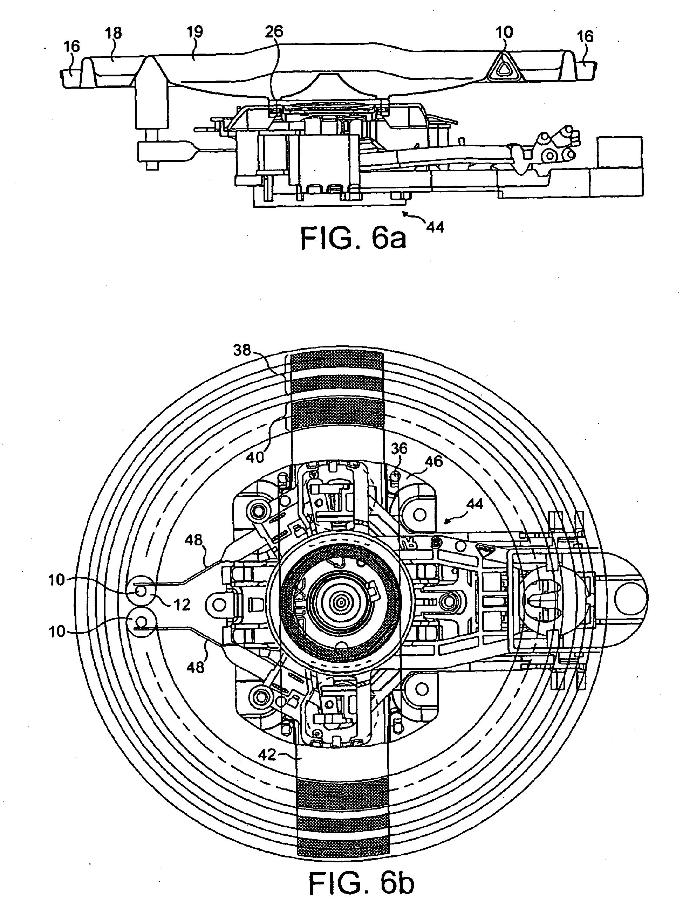

A schematic view of the heater plate to which the element 2 is to be attached is shown in Fig. 2. It may also be seen in greater detail in Figs. 4, 6a and 7a. The first general impression of the heater plate 14 is that virtually none of it is flat. The plate 14 is made from stainless steel as conventional plates are, but rather than being 0.4 to 0.8 mm thick as is conventional, the thickness of the plate 14 is only of the order of 0.2 to 0.3 mm. Furthermore, as is clearest from Fig. 6a, there is no aluminium diffuser plate several millimetres thick attached to the underside of the plate as there would be in a conventional underfloor heater. Indeed there is no diffuser at all in the conventional sense.

Turning to the more specific features of the plate, at the periphery there is an upwardly open channel 16 for clamping onto the depending edge of a vessel wall. As may be seen most clearly from Fig. 4, the upper edge of the outer wall of the channel 16 is not a simple edge as it would be in a typical Sure Seal (trade mark) plate but is rolled over to form a lip 17. This gives increased rigidity in order partially to compensate for the reduced strength of the thin grade of stainless steel used to form the plate. The inner wall of the channel 16 rises to ridge 18 which is also a common feature of heater plates incorporating the Sure Seal (trade mark) heater sealing system. However, inwardly of the ridge 18, rather than the rest of the plate being flat as would be conventional, there is provided a further ridge 19 which is shaped to accommodate the heating element 2 shown in Fig. 1. It is thus generally triangular in sectional profile with the apex of the triangle at the top. It also has two diametrically opposed additionally raised portions 20 to accommodate the kinked portions 8 of the heating element. As will be seen from Fig. 6a, the two ridges 18,19 are at approximately the same height except in the two raised regions 20.

Inwardly of the element ridge 19 is a dished portion of the plate 22. However, it is not a simple dish shape since in the centre of the plate is a conical formation 24. The face of the plate 14 inwardly of the element ridge 19 therefore has the approximate shape of the lower surface of a torus. Around the base of the central cone 24 is an annular recess 26, the purpose of which will be explained below.

It may be seen therefore from Fig. 2 and Figs. 4, 6a and 7a that the plate 14 has several areas of different curvature: for example the ridges 18,19; the dished portion 22 and the conical central portion 24. It also has several steps: for example the inwardly facing wall of the outer ridge 18; and the annular recess 26 around the cone 24. The combination of the different curvatures and the combination of areas of curvature with stepped regions increase the rigidity of the plate but also help to disguise distortion encountered during brazing.

Fig. 3 shows a schematic view of a support bracket 28 which is fitted to the underside of the element and plate assembly 2,14. The attachment of the support bracket 28 to the rest of the heater will be explained with reference to the following Figures. However, the general features may be seen by considering the schematic view of Fig. 3. The bracket is approximately rectangular in plan with its two ends bent upwardly to form a pair of spaced flanges 30. In the lower central region of the bracket 28 is a circular hole 32 boarded by a slightly raised flat annular region 34. Three tabs 36 are cut and bent out of the plane of the bracket to form fixings for a control unit.

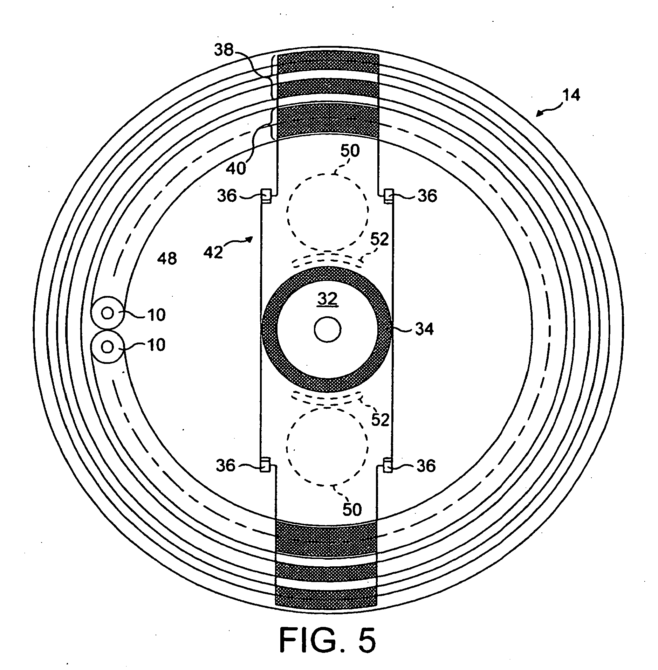

Construction of the heater will now be described with reference to Figures 5, 6a, 6b, 7a and 7b. It should be noted however that the shape of the support bracket in this embodiment is of slightly different form to that shown in Fig. 3 but the general features are the same.

Firstly the element 2 is produced. This starts with a straight round tube of mild steel flash-coated in copper, known in the art as a Bundy tube, having an outer diameter of 8.8 mm. A coil of nickel-chromium resistance wire is then stretched centrally down the core of the tube. This is then filled with magnesium oxide with a density typically 2.3 grams per cubic centimetre (gcm⁻³). The tube is then roll-reduced in a rolling mill to an outer diameter of typically 8.0 mm, increasing the density of the magnesium oxide to typically 3.0 - 3.2 gcm⁻³. The tube cold ends 12 are then bent 90 degrees and the tube formed in a circle of typical diameter 100 mm. The tube tends not to compress on the inner radius but does stretch on the outer radius during bending. This results in micro cracks in the compacted magnesium oxide. The element therefore needs to be recompacted. It is at this final stage that the triangular shape is introduced throughout most of its length. The cold ends 12 are held together by a tie or a clip so that they can be joined during the brazing process.

The plate 14 is formed from a sheet of 0.4 mm or thinner stainless steel which is then pressed into the shape shown in Fig. 2 on a suitable former. The plate 14 is inverted and a suitable braze is then applied to the inside of the element ridge 19 and the element 2 is placed inside the ridge. A copper-only braze material, without any silver, can be used as is explained below.

Next the steel support bracket 42 is fitted. As mentioned above this differs a little from the one in Fig. 3. It is stamped from zinc-coated mild steel approximately 0.8 to 1.2 mm thick and has a substantially planar central portion and two outer flanges 38,40, one at either end. The outer flanges 30,40 are parallel to, but vertically offset from, the central portion. At each corner of the central portion is a resilient clip 36 bent out of the plane of the bracket. In the centre of the central portion is the circular hole 32 bordered by a lip 34. It will be seen that steel support bracket 42 extends right across the diameter of the plate 14 between the two points approximately 90° away from the cold tails 10. The bracket 42 will thus pass underneath the raised portions of the element and plate 8,20.

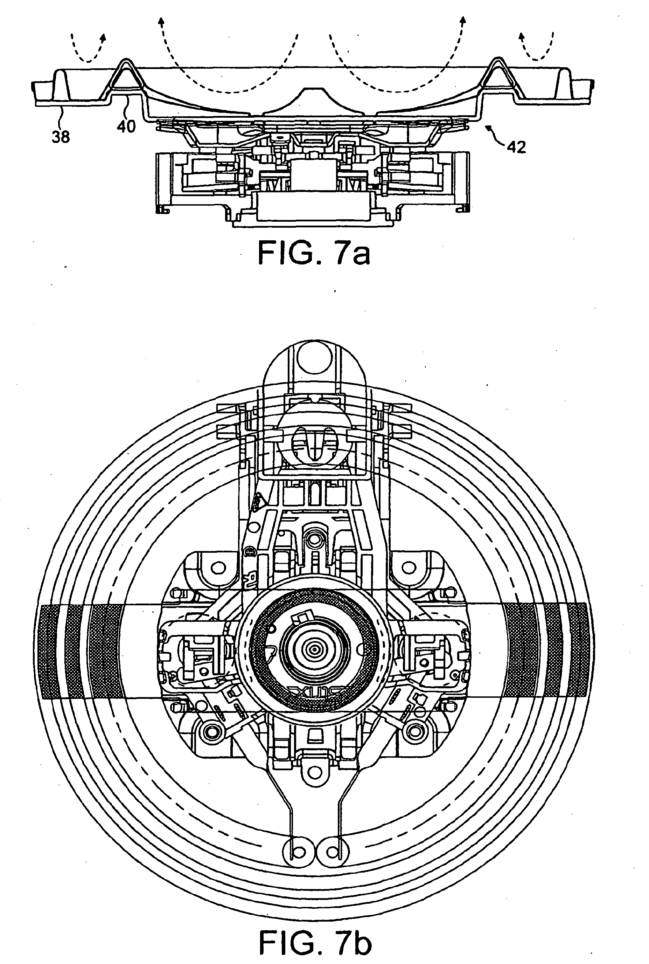

More braze material is applied to the outer flanges 38,40 of the support bracket 42 (see Fig. 7a) and also to the annular lip 34 around the central hole 32 in the bracket and the bracket is placed on top of the element 2 and the bottom of the channel 16 as shown in Fig. 5. It is also placed between the ends 12 of the element.

The whole assembly may then be placed into a brazing furnace supported for example on a ceramic or stainless steel ring or band. Since the element plate 14, element sheath 4 and the support bracket 42 are all steel components they may be brazed at around 1050 °C in a reducing atmosphere furnace, without the use of flux. This is a much higher temperature than would have been possible if any aluminium components had been present, limiting the braze temperature to approximately 600 °C. The omission of flux obviates the need to provide means for venting flux gases which are normally produced when a flux is used. The reducing atmosphere enables a silver-free braze to be used and importantly means that the plate comes out clean without the need for a subsequent polishing step, significantly reducing manufacturing time and cost.

The very thin grade of stainless steel used for the plate 14 and the lack of a thick uniform diffuser plate on its underside mean that the plate is susceptible to distortion as it cools after the brazing process. More particularly the thin plate 14 will cool relatively quickly whereas the element 2 will take much longer to cool. Thus as the element 2 cools and contracts it will apply a compressive force to the already-cool plate, causing it to deform. In conventional underfloor heaters the diffuser plate would prevent this by neutralising the thermal differentials.

Distortion is minimised to some degree in accordance with the embodiments of the invention by the various ridges and curved portions in the profile of the heater plate which act to increase its rigidity as compared to a planar plate. However, some distortion will inevitably occur and will be most likely in those areas of the heater plate 14 which experience the largest temperature differential during brazing and these will be where the heating element 2 and the support bracket 42 are in contact with the plate. Thus, distortion is most likely in the region of the outer ridge 18, the element ridge 19 and the annular recess 26. However, the design of the plate 14 is such that any distortion in these, or indeed in other areas, is likely to be disguised. For example, distortion around the outer most ridge 18 will tend to take place within the peripheral channel 16 or the valley formed between the two ridges 18, 19. It is therefore unlikely to be perceptible to a user looking inside a vessel incorporating the heater. Mode II distortion around the element ridge 19 will be disguised by the raised portions 20. Radial distortion around the annular recess 26 will similarly be disguised by the well defined edges of that recess. Indeed, the annular symmetry of the area of contact between the support bracket 42 on one hand and the heater plate on the other hand means that distortion is also likely to have a substantially annular symmetry so that even if it is perceptible it will appear to be part of the machined design.

As well as the inherent enhancement to rigidity from the profile of the heater plate 14, further significant structural support is given by the heating element 2 itself which by virtue of being brazed together at its two ends 12 has the stiffness of a solid ring. Of course, the support bracket 42 also gives some rigidity to the structure. In particular, since in this embodiment the support bracket 42 extends right to the edges of the heater plate 14, it gives additional stiffness to the region of the plate outwardly of the element which might otherwise be weaker than the part of the plate inside the element. This is of greatest benefit when the plate is significantly wider then the element - e.g. in a traditional style of kettle.

Once the heater has been brazed and allowed to cool down, the control unit 44 may be fitted. This is snap-fitted to the support bracket 42 by four resilient tabs 36 bent out of the plane of the middle portion of the bracket which engage in suitable apertures in the mounting plate 46 of the control unit. Other possibilities include a slide and snap arrangement or tabs which are folded over the mounting plate 46. The control unit 44 is a variant of the Applicant's standard U Series of controls. The only significant modification is that the electrical supply from the control unit 44 to the element is made directly by means of a pair of extended tabs 48 which are resistance welded directly to the cold tails 10. This is facilitated by the precision achievable with the construction shown whereby the mounting plate 46 of the control unit is in precise registration with the element tube 4 via the support bracket 42. This obviates the need for connecting wires and spade connectors etc. although these may be provided if desired.

The two bimetals of the control unit 44 will bear against the flat central portion of the support bracket 42 and their location in use is shown by the dashed outline circles 50 in Fig. 5. As shown the bimetals will be heated via the support bracket 42 both directly from the heating element 10 by means of the inner of the two pairs of outer flanges 40; and by the water in the vessel by means of the annular region of contact 26,34 between the brackets and the plate. However, depending upon the type of operation required, thermal restrictions in the form of cut-outs may be formed in the support bracket 42 in order to alter the degree of influence of the element 10 and the water of the vessel respectively on the temperature of the bimetals. For example, by providing crescent-shaped cut-outs 52, shown in dashed lines in Fig. 5, between the bimetal location 50 and the annular contact area 26,34 between the bracket and the plate, the bimetals can be arranged to be influenced predominantly by the temperature of the heating element.

Having the bimetals responsive primarily to the element temperature is desirable in allowing overheating of the element to be detected quickly and power to the element to be interrupted as a consequence. In fact, the raised portion of the element and the plate 8,20 will now become apparent in purpose. For as the water in the vessel boils away (for example if a boiling cutout provided should malfunction) the raised regions of the plate 20 will be exposed first and will thus be the first to rise rapidly in temperature. Since these are directly above the support bracket 42 and in particular its region 40 of contact with the element 10, this rise in temperature will be rapidly communicated to the bimetals to operate them to interrupt power to the element 10. By having two raised regions 20 diametrically opposed to one another, this safety operation will not be adversely affected if the vessel is tilted slightly. In other words two independent, separated overheat protection mechanisms may be provided which meet all current safety standards and each of which is a backup for the other. Even in the worst case where the vessel is tilted on the axis joining the two regions 20, they will be exposed as quickly as a single central region would have been. In all other cases one or other will be exposed more quickly.

Another advantage which may be obtained in accordance with the invention may be appreciated by looking at Fig. 7a. As is demonstrated by the dashed arrow lines, the streamlined shape of the plate 14, including the element ridge 19, the dished portion 22 and the central cone 24, encourages large scale circulation of water in the vessel during heating since the shape conforms to the natural convection pattern. This helps to avoid the formation of stagnation zones and thus reduces the amount of noise generated during heating as a result of nucleate boiling, which can be a problem when high power heaters are used, and allows a thermal sensor more accurately to sense the temperature of the water as it is being heated.

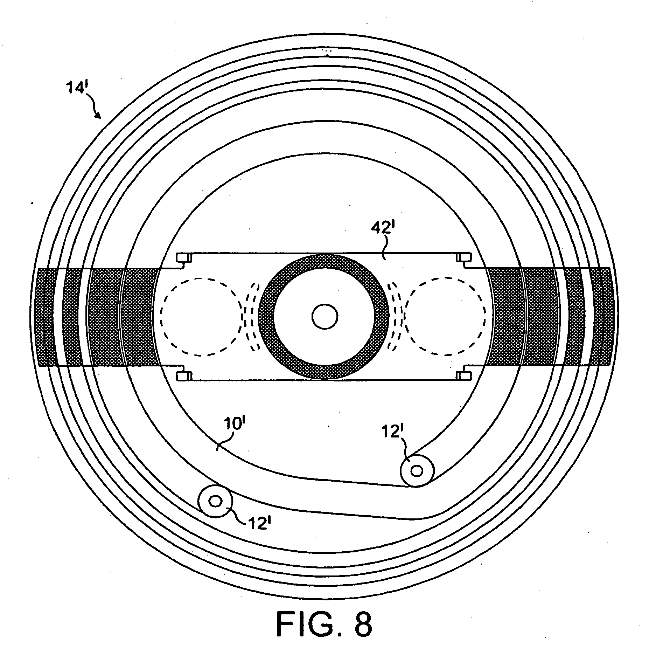

Figure 8 shows another embodiment of the invention. This is very similar to the previously described embodiment except that the element 10' extends significantly beyond 360° and indeed is almost two complete turns in length. Consequently the ends 12' of the element are not in contact with one another in this embodiment although this is compensated by the fact that a portion of the element spans the gap between the two ends and thus there is no reduction in the rigidity of the heater plate 14'. Of course, the double width of the element throughout most of its length means that there will need to be a double element ridge provided in the heater plate. Otherwise construction and operation of this heater is very similar to that described previously and will not be described again. The advantage of this arrangement is that for a given power density a higher power may be achieved in a smaller diameter. This is useful in small appliances (e.g. coffee makers) or to reduce the material cost of the element plate further.

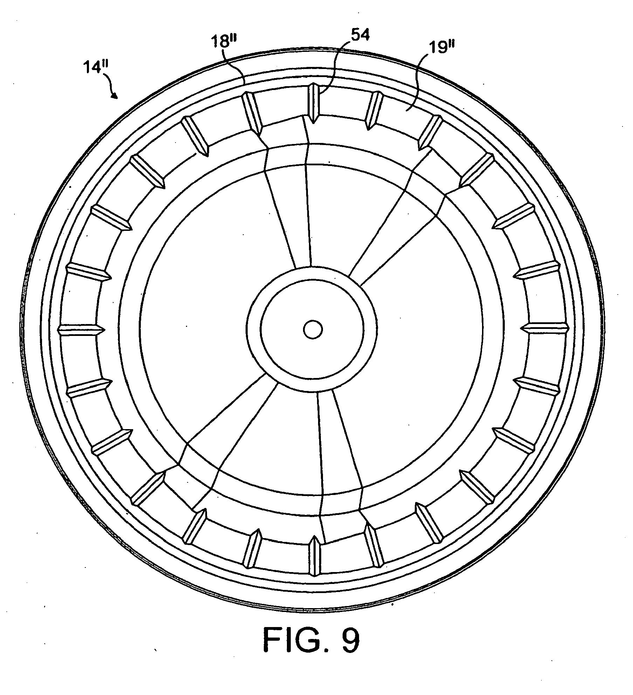

A further embodiment of the invention is shown schematically in Fig. 9. This Figure is a plan view of an element in accordance with this further embodiment in which a circumferentially spaced series of radially extending ribs 54 is provided in the valley formed between the outermost ridge 18'' and the element ridge 19''. This also serves to strengthen the peripheral region of the heater plate 14'' such that it may then not be necessary to extend the support bracket to the edges of the heater plate 14'' as in previous embodiments, but rather it could extend outwardly only as far as the element. This would of course reduce the material cost of the support bracket whilst requiring only the formation of some additional features in the stainless steel plate when it is formed. The support bracket for use in this embodiment is therefore likely to be more similar to that shown in Fig. 3. As an alternative to the discrete ribs, an undulating wave form could be provided instead.

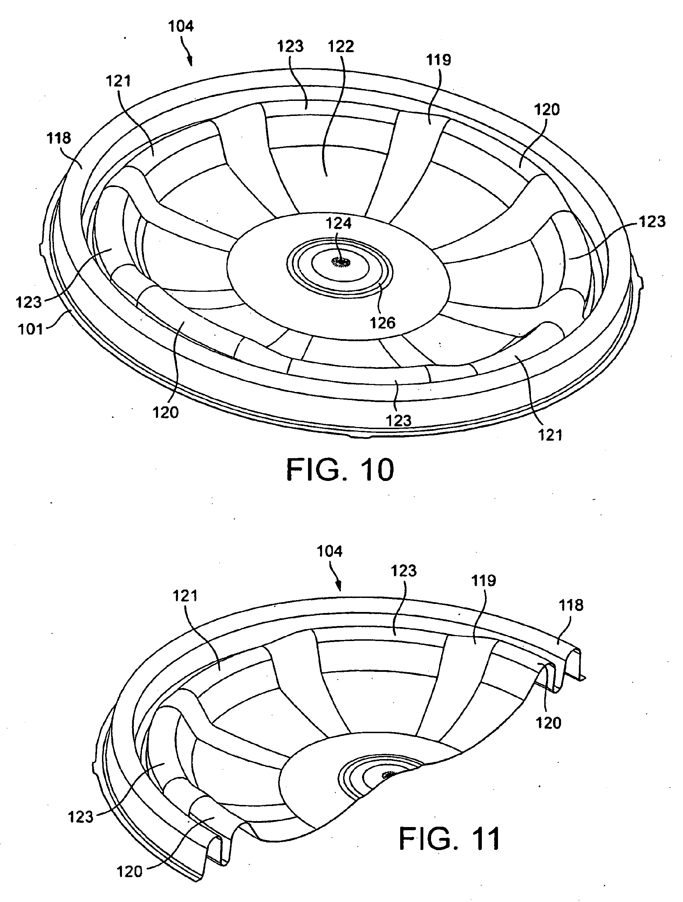

Another embodiment of the invention is shown in Fig. 10. This is similar to the embodiment previously described in relation to Figures 2-7 in that the heater plate 104 has an outer peripheral ridge 118, a ridge 119 shaped to accommodate a heating element attached to the underside of the plate, a generally dish-shaped portion 122, and a central dome 124 surrounded at its base by an annular recess 126. In this embodiment there is a flange 101 projecting from the bottom of the ridge 118 at the periphery of the plate. The plate is made from stainless steel and its thickness is 0.2 mm.

As will be seen from Figs. 10 and 11, the ridge 119 and the generally dish-shaped portion 122 of the plate have two diametrically opposed raised portions 120 and two diametrically opposed lowered portions 121, the alternate raised and lowered portions spaced at approximately 90° around the plate. In between the raised and lowered portions 120,121 there are intermediate portions 123 of median height. In other words, the circumferential profile of the plate undulates between three different height levels. The plate 104 therefore has variations in curvature not only in the radial direction, i.e. the ridges 118, 119, the dished portion 122 and the domed central portion 124; but also in the circumferential direction. The addition of the portions of different height in the circumferential direction further increase the rigidity of the plate. More particularly, the hills and troughs in the circumferential profile of the plate help to disguise mode II distortion produced during manufacture or during use.

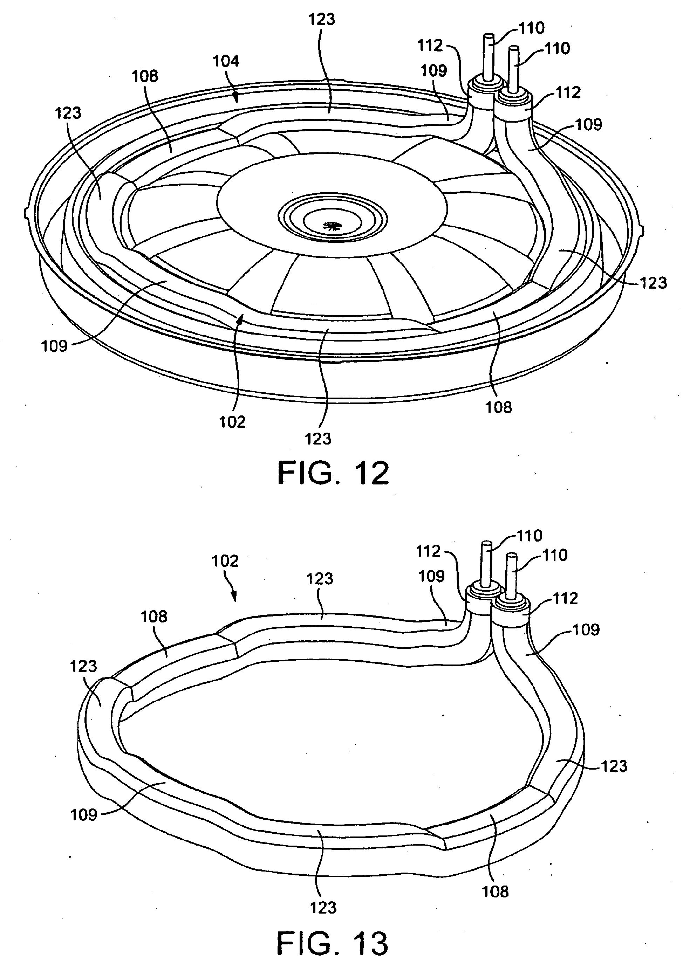

Fig. 12 shows a heating element 102 attached to the underside of the heater plate 104. The heated part of the element 102 extends around almost 360° with the two ends of the element 112 touching one another and bent at right angles to the general plane of the element so that the cold tails 110 which project therefrom bend downwardly.

As can be more clearly seen from Fig. 13, the heated part of the element 102 is not in a single plane but rather comprises sections 108,109 kinked alternately upwardly and downwardly to match the raised and lowered portions 120,121 of the ridge 119 in the heater plate 104. Two upwardly kinked sections 108 are spaced approximately 90° away from the cold tails 110, diametrically opposite one another. There is a downwardly kinked section 109 diametrically opposite the cold tails. The element is also kinked downwardly in the sections 109 adjacent to the ends 112.

As previously described in relation to the earlier embodiments, the raised portions of the element and plate 108,120 provide overheat protection by becoming exposed first if the vessel starts to boil dry, even if the vessel is tilted. A further advantage may be obtained in accordance with this embodiment of the invention by virtue of the lowered portions of the element and plate 109,121 spaced at approximately 90° from the two raised portions 108,120. In the worst case the vessel is tilted on the axis joining the raised portions 108,120 so that the uppermost part of the plate is opposite the cold tails 110. This regions of the plate and element is furthest from the thermal sensors so a rise in temperature will not immediately be communicated to the bimetals. However, the lowered portions 109,121 in these regions will trap liquid, preventing local overheating of the element, until the raised portions of the element 108 overheat and switch the bimetals.

Although in the embodiment described above the element is kinked to match the raised and lowered portions in the plate, this is not required. The plate may be formed with an undulating circumferential profile curvature and either a flat, kinked or sloped element then brazed onto it. The element may not be kinked as described above but could be planar while the plate may still be provided with raised and lowered portions, or other undulations, in its circumferential profile in the dished portion 122 inwardly of the element ridge 119. This would provide the benefits of disguising mode II distortion and increasing the rigidity of the plate, as well as trapping pockets of water to reduce the chance of overheat if the heater is operated when tilted. Alternatively, the element may not have distinct kinked regions as described above but may instead slope smoothly from a lower point in the region of the cold tails to a raised point at 90° from the cold tails, and back down to a lowered point opposite the cold tails. The angle of such a sloped element may be chosen to be approximately 3° in order that the vessel passes the standard test for boiling dry when tilted by 3°.

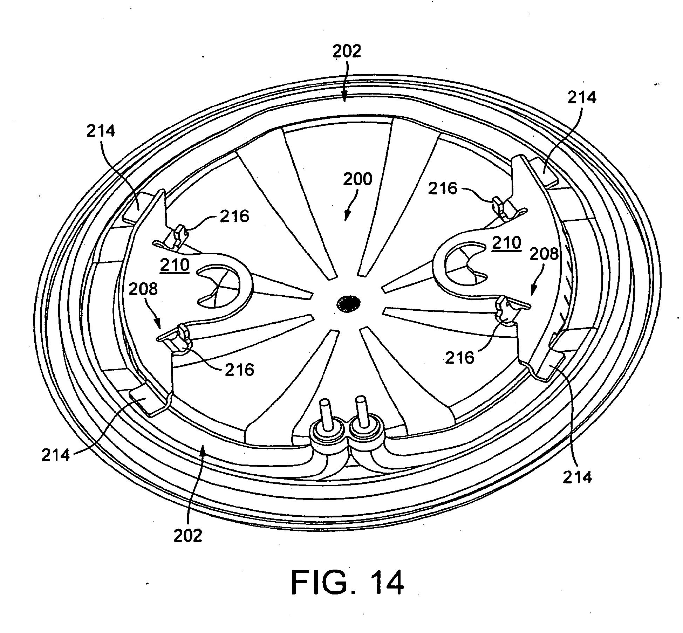

A further embodiment of the invention is shown in Figs. 14 to 16. This is similar to the previous embodiment of Figs. 10 to 13 and thus only the main differences will be described. The first main difference is in the shape of the central region 200. Rather than having a cone at the centre, the whole central region, inwardly of the element 202 is broadly formed as a continuous convex dome (when viewed from the liquid side). A channel 204 is formed at the periphery of the central region 200 where it meets the ridge 206 which accommodates the element 202. The convex central region 200 gives a good degree of rigidity to the plate whilst the channel 204 and the wall of the ridge 206 between them accommodate any distortion arising during manufacture or use without any overt signs thereof.

As in the previous embodiment the element 202 and the ridge 206 have a circumferential profile of varying height with alternating raised and lowered portions with median portions inbetween. This circumferential profile extends radially inwardly from the ridge across the central region towards the centre of the plate. However it tapers towards the centre so that the circumferential height variations are become less marked the further away from the ridge 206 they are.

A closer inspection of the sectional profile of the element 202 and the ridge 206 reveals that the shape is a little different from earlier embodiments. It is still upwardly tapering and indeed generally triangular but the sides bow outwardly especially near the apex to make the profile look more bullet-shaped. This further increases the contact surface area between the element 202 and the plate.

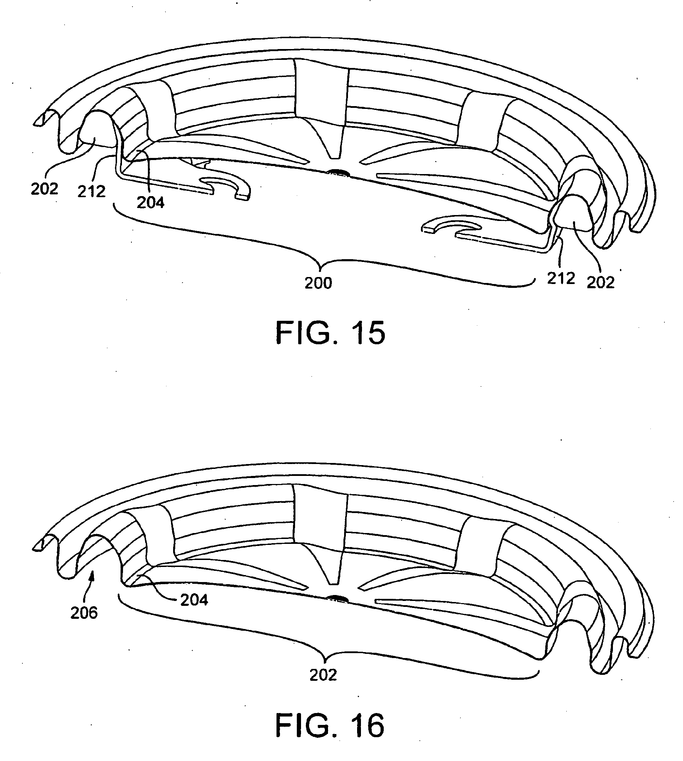

Another significant difference over earlier embodiments displayed by the one of Figs. 14 to 16 is that rather than a single thermally conductive member extending across the plate, there are a pair of separate steel heat bridges 208 on opposite sides of the plate. They are identical and comprise a planar horizontal flange portion 210 and a vertical flange 212. The horizontal flange is shaped to receive a circular snap-acting bimetallic actuator. As may be seen in Fig. 15, the vertical flange 212 is sandwiched between the sheath of the element 202 and the ridge 206 in the plate which accommodates the element. The bridges 208 are assembled together with the element 202 into the ridge 206 with braze material prior to being brazed. The vertical flange 212 is arcuate in plan profile to allow it to follow the contour of the element.

At the circumferential edges of each heat bridges 208 a pair of tabs 214 are released from the vertical flange 212 so as to bear onto the exposed face of the element 202. The main purpose of these tabs 214 is to give the heat bridges 208 stability against rocking sideways.

At the sides of the horizontal flange 210 of each heat bridge 208 are resilient clips 216 which are bent and released from the flange. These enable a control unit (not shown) to be snap-fitted between the heat bridges 208 with its bimetals against the respective horizontal flanges 210.

## Claims

1. A heater for a liquid heating vessel comprising a stainless steel heater plate (14; 14'; 14"; 104) and a sheathed heating element (2; 102; 202) directly bonded to or formed on the underside of said heater plate, **characterised in that** said heater plate (14; 14'; 14"; 104) has a thickness of less than or equal to 0.3 mm and comprises a ridge (19; 119; 206) which is shaped to accommodate the sheathed heating element (2; 102; 202); wherein, when the heater plate is viewed in cross-section, a vertical section of the element ridge (206) extends from adjacent the element (202) to an annular channel (204) radially inwardly of the element (202).

2. A heater as claimed in 1 wherein said heater plate has a thickness substantially equal to 0.2 mm.

3. A heater as claimed in claim 1 or 2 wherein the annular channel (204) inwardly of the element (202) absorbs distortion of the heater plate during manufacture.

4. A heater as claimed in any preceding claim wherein the central region of the plate is substantially continuously curved.

5. A heater as claimed in claim 4 wherein the central region has an overall domed shape.

6. A heater as claimed in claim 5 wherein the central region is convex when viewed from the liquid-facing side.

7. A heater as claimed in any preceding claim comprising a thermally conductive member (28; 42; 208) in good thermal contact with the heating element (2; 102; 202) and adapted to mount one or more control components.

8. A heater as claimed in claim 7 wherein the thermally conductive member comprises mainly steel.

9. A heater as claimed in any preceding claim comprising two heat bridges (208) between the heating element (202) and a mounting location (210) for a thermal sensor.

10. A heater as claimed in any of claims 7, 8 or 9 wherein said thermally conductive member (28; 42) or heat bridges (208) is/are mounted to the element (2; 102; 202) by a tab (212) thereof secured between the element and the heater plate. -

11. A heater as claimed in any preceding claim wherein said heater plate (14; 14'; 14"; 104) has a profile including a plurality of curvatures.

12. A heater as claimed in any preceding claim comprising a portion of the heater plate (14; 14'; 14"; 104) which is locally raised or lowered in a circumferential direction.

13. A heater as claimed in claim 12 wherein said raised and/or lowered portion has a tapering extent across the radius of the plate.

14. A heater as claimed in claim 12 or 13 wherein the circumferential profile comprises at least one raised portion and at least one lowered portion.

15. A heater as claimed in any of claims 12 to 14 wherein the raised/lowered portion is in the region of the heater plate over the element and wherein the element is raised and/or lowered so as to conform to the plate.

16. A heater as claimed in claim 15 wherein the heater plate comprises two locally raised portions in its circumferential profile.

17. A heater as claimed in claim 15 or 16 wherein the circumferential profile comprises two lowered portions.

18. A heater as claimed in claim 15 wherein the circumferential profile of the heater comprises two raised and two lowered portions alternating around the circumference.

19. A heater as claimed in any preceding claim wherein the heater plate is of stainless steel.

20. A heater as claimed in any preceding claim suitable for heating water to boiling.

21. A heater as claimed in any preceding claim wherein the heater plate is circular.

22. A heater as claimed in any preceding claim wherein the power of the heating element is in the approximate range 900 W to 3000 W, preferably 2 to 3 kilowatts.

## Patentansprüche

1. Heizer für ein Heizgefäß für Flüssigkeiten, umfassend eine Heizplatte (14; 14'; 14"; 104) aus Edelstahl und ein ummanteltes Heizelement (2; 102; 202), welches direkt an der Unterseite der Heizplatte befestigt oder an dieser angeformt ist,
**dadurch gekennzeichnet, dass**
die Heizplatte (14; 14'; 14"; 104) eine Dicke von weniger als oder im Wesentlichen gleich 0,3 mm aufweist und eine Rippe (19; 119; 206) aufweist, die ausgestaltet ist, um das ummantelte Heizelement (2; 102; 202) aufzunehmen;
wobei, wenn die Heizplatte im Querschnitt betrachtet wird, ein im Wesentlichen vertikaler Abschnitt der Elementrippe (206) sich von neben dem Element (202) hin zu einem ringförmigen Kanal (204) radial einwärts von dem Element (202) erstreckt.

2. Heizer nach Anspruch 1, wobei die Heizplatte eine Dicke von im Wesentlichen gleich 0,2 mm aufweist.

3. Heizer nach Anspruch 1 oder 2, wobei der ringförmige Kanal (204) einwärts von dem Element (202) eine Verformung der Heizplatte während der Herstellung absorbiert.

4. Heizer nach einem der vorhergehenden Ansprüche, wobei der zentrale Bereich der Platte im Wesentlichen kontinuierlich gewölbt ist.

5. Heizer nach Anspruch 4, wobei der zentrale Bereich insgesamt eine Kuppelform aufweist.

6. Heizer nach Anspruch 5, wobei der zentrale Bereich bei Betrachtung von der der Flüssigkeit zugewandten Seite konvex ist.

7. Heizer nach einem der vorhergehenden Ansprüche, umfassend ein wärmeleitfähiges Element (28; 42; 208) in gutem Wärmekontakt mit dem Heizelement (2; 102; 202), das eingerichtet ist, ein oder mehrere Steuer/Regelbauelemente aufzunehmen.

8. Heizer nach Anspruch 7, wobei das wärmeleitfähige Element hauptsächlich Stahl umfasst.

9. Heizer nach einem der vorhergehenden Ansprüche, umfassend zwei Wärmebrücken (208) zwischen dem Heizelement (202) und einer Montagestelle (210) für einen Wärmesensor.

10. Heizer nach einem der Ansprüche 7, 8 oder 9, wobei das wärmeleitfähige Element (28; 42) oder Wärmebrücken (208) an dem Element (2; 102; 202) mittels einer Fahne (212) von diesem, die zwischen dem Element und der Heizplatte gesichert ist, angebracht ist/sind.

11. Heizer nach einem der vorhergehenden Ansprüche, wobei die Heizplatte (14; 14'; 14", 104) ein Profil, welches eine Vielzahl von Krümmungen einschließt, aufweist.

12. Heizer nach einem der vorhergehenden Ansprüche, umfassend einen Teilbereich der Heizplatte (14; 14'; 14", 104), der in einer Umfangsrichtung lokal erhöht oder erniedrigt ist.

13. Heizer nach Anspruch 12, wobei der erhöhte und/oder erniedrigte Teilbereich eine sich verjüngende Erstreckung über den Radius der Platte hinweg aufweist.

14. Heizer nach Anspruch 12 oder 13, wobei das Umfangsprofil mindestens einen erhöhten Teilbereich und mindestens einen erniedrigten Teilbereich aufweist.

15. Heizer nach einem der Ansprüche 12 bis 14, wobei der erhöhte/erniedrigte Teilbereich sich im Bereich der Heizplatte über dem Element befindet und wobei das Element erhöht und/oder erniedrigt ist, um mit der Platte übereinzustimmen.

16. Heizer nach Anspruch 15, wobei die Heizplatte zwei lokal erhöhte Teilbereiche in ihrem Umfangsprofil aufweist.

17. Heizer nach Anspruch 15 oder 16, wobei das Umfangsprofil zwei erniedrigte Teilbereiche umfasst.

18. Heizer nach Anspruch 15, wobei das Umfangsprofil des Heizers zwei erhöhte und zwei erniedrigte Teilbereiche umfasst, die sich um den Umfang herum abwechseln.

19. Heizer nach einem der vorhergehenden Ansprüche, wobei die Heizplatte aus Edelstahl ist.

20. Heizer nach einem der vorhergehenden Ansprüche, der geeignet ist, Wasser bis zum Kochen zu erhitzen.

21. Heizer nach einem der vorhergehenden Ansprüche, wobei die Heizplatte kreisförmig ist.

22. Heizer nach einem der vorhergehenden Ansprüche, wobei die Leistung des Heizelements im Bereich von ungefähr 900 W bis 3000 W, vorzugsweise 2 bis 3 Kilowatt, ist.

## Revendications

1. Dispositif de chauffage destiné à un récipient qui chauffe un liquide comprenant une plaque chauffante en acier inoxydable (14 ; 14'; 14" ; 104) et un élément chauffant enrobé (2 ; 102 ; 202) directement collé ou formé sur le dessous de ladite plaque chauffante, **caractérisé en ce que** ladite plaque chauffante (14 ; 14'; 14" ; 104) présente une épaisseur inférieure ou sensiblement égale à 0,3 mm et comprend une saillie (19 ; 119 ; 206) qui est mise en forme de manière à recevoir l'élément chauffant enrobé (2 ; 102 ; 202) ; dans lequel, lorsque la plaque chauffante est regardée en coupe transversale, une section sensiblement verticale de la saillie de l'élément (206) s'étend adjacente à partir de l'élément (202) vers un canal annulaire (204) de manière radiale et vers l'intérieur de l'élément (202).

2. Dispositif de chauffage selon la revendication 1, dans lequel ladite plaque chauffante présente une épaisseur sensiblement égale à 0,2 mm.

3. Dispositif de chauffage selon la revendication 1 ou la revendication 2, dans lequel le canal annulaire (204) vers l'intérieur de l'élément (202), absorbe une déformation de la plaque chauffante au cours de la fabrication.

4. Dispositif de chauffage selon l'une quelconque des revendications précédentes, dans lequel la région centrale de la plaque est sensiblement incurvée de manière continue.

5. Dispositif de chauffage selon la revendication 4, dans lequel la région centrale présente une forme globale bombée.

6. Dispositif de chauffage selon la revendication 5, dans lequel la région centrale est convexe quand on la regarde à partir du côté qui fait face au liquide.

7. Dispositif de chauffage selon l'une quelconque des revendications précédentes, comprenant un élément conducteur de manière thermique (28 ; 42 ; 208) en bon contact thermique avec l'élément chauffant (2 ; 102 ; 202) et apte à recevoir le montage d'un ou de plusieurs composants de commande.

8. Dispositif de chauffage selon la revendication 7, dans lequel l'élément conducteur de manière thermique comprend principalement de l'acier.

9. Dispositif de chauffage selon l'une quelconque des revendications précédentes, comprenant deux ponts thermiques (208) entre l'élément chauffant (202) et un emplacement de montage (210) d'un capteur thermique.

10. Dispositif de chauffage selon l'une quelconque des revendications 7, 8 ou 9, dans lequel ledit élément conducteur de manière thermique (28 ; 42) ou les ponts thermiques (208) sont montés sur l'élément (2 ; 102; 202) par une patte (212) de celui-ci, fixée entre l'élément et la plaque chauffante.

11. Dispositif de chauffage selon l'une quelconque des revendications précédentes, dans lequel ladite plaque chauffante (14; 14' ; 14" ; 104) présente un profil qui comprend une pluralité de courbures.

12. Dispositif de chauffage selon l'une quelconque des revendications précédentes, comprenant une partie de la plaque chauffante (14 ; 14' ; 14" ; 104) qui est localement relevée ou abaissée dans une direction circonférentielle.

13. Dispositif de chauffage selon la revendication 12, dans lequel ladite partie relevée et / ou abaissée présente une étendue allant en s'amincissant sur le rayon de la plaque.

14. Dispositif de chauffage selon la revendication 12 ou la revendication 13, dans lequel le profil circonférentiel comprend au moins une partie relevée et au moins une partie abaissée.

15. Dispositif de chauffage selon l'une quelconque des revendications 12 à 14, dans lequel la partie relevée / abaissée se situe dans la région de la plaque chauffante au-dessus de l'élément et dans lequel l'élément est relevé et / ou abaissé de manière à s'adapter à la plaque.

16. Dispositif de chauffage selon la revendication 15, dans lequel la plaque chauffante comprend deux parties localement relevées dans son profil circonférentiel.

17. Dispositif de chauffage selon la revendication 15 ou la revendication 16, dans lequel le profil circonférentiel comprend deux parties abaissées.

18. Dispositif de chauffage selon la revendication 15, dans lequel le profil circonférentiel du dispositif de chauffage comprend deux parties relevées et deux parties abaissées en alternance autour de la circonférence.

19. Dispositif de chauffage selon l'une quelconque des revendications précédentes, dans lequel la plaque chauffante est en acier inoxydable.

20. Dispositif de chauffage selon l'une quelconque des revendications précédentes, approprié à chauffer de l'eau et à la porter à l'ébullition.

21. Dispositif de chauffage selon l'une quelconque des revendications précédentes, dans lequel la plaque chauffante est circulaire.

22. Dispositif de chauffage selon l'une quelconque des revendications précédentes, dans lequel la puissance de l'élément chauffant se situe dans une plage comprise approximativement entre 900 W et 3000 W, de préférence entre 2 et 3 kilowatts.
